# EUROPÄISCHE PATENTSCHRIFT

(11) **EP 0 318 111 B1**
(45) Veröffentlichungstag und Bekanntmachung des Hinweises auf die Patenterteilung: **10.11.1993**
(21) Anmeldenummer: 88202653.7
(22) Anmeldetag: 24.11.1988
(51) Int. Cl.: C01G 23/00

(54) **Verfahren zur Herstellung von Bariumtitanat in Pulverform**
Process for the preparation of barium titanate in powder form
Procédé de préparation de titanate sous forme de poudre

(30) Priorität: 25.11.1987 DE 3739853
(43) Veröffentlichungstag der Anmeldung: 31.05.1989
(73) Patentinhaber: Philips Patentverwaltung GmbH, 22335 Hamburg (DE); Philips Electronics N.V., 5621 BA Eindhoven (NL)
(72) Erfinder: Klee, Mareike Katharine, Dr., D-5142 Hückelhoven/Brachelen (DE); Brand, Hans-Wolfgang, D-5100 Aachen (DE)
(74) Vertreter: Kupfermann, Fritz-Joachim, Dipl.-Ing.

(56) Entgegenhaltungen:
- EP-A- 0 141 551
- FR-A- 2 601 352
- CHEMICAL ABSTRACTS, Band 105, Nr. 18, 3. November 1986, Seite 373, Zusammenfassung Nr. 163758d, Columbus, Ohio, USA; R.C. PASTOR: "Low-temperature preparation of binary oxides" & Mater. Res. Bull. 1986, Band 21, Nr. 7, Seiten 761-764
- CHEMICAL ABSTRACTS, Band 93, Nr. 2, 14. Juli 1980, Seite 694, Zusammenfassung Nr. 18231f, Columbus, Ohio, USA; K. MATSUOKA et al.: "Hydrothermal synthesis of barium titanate" & Rep. Res. Lab. Hydrotherm. Chem. (Kochi, Jpn.) 1978, Band 2, Nr. 9-15, Seiten 45-47

## Beschreibung

Die Erfindung betrifft ein Verfahren zur Herstellung von Bariumtitanat in Pulverform, wobei Titandioxid mit Bariumhydroxid bei einer Temperatur im Bereich von 60 bis 95 °C unter Ausschluß von CO₂ zur Reaktion gebracht wird.

Keramische Pulver mit Perowskitstruktur, wie z.B. Bariumtitanat-Pulver, sind ein wichtiger Ausgangsstoff zur Erstellung unterschiedlichster elektronischer Bauelemente wie z.B. Vielschichtkondensatoren oder auch nichtlineare Widerstände mit positiver Temperaturcharakteristik. Das Erfordernis der ständig steigenden Verbesserung der elektronischen Bauelemente sowie eine bessere Prozeßbeherrschung bei der Herstellung dieser Bauelemente stellt erhöhte Anforderungen an die Ausgangsstoffe. Es werden insbesondere feinteilige Pulverpartikel mit runder Partikelform und in enger Partikelgrößenverteilung gefordert. Die Ausgangsstoffe sollen weiterhin eine hohe Reinheit besitzen. Darüberhinaus müssen die zur Herstellung der BaTi0₃-Pulver eingesetzten Verfahren kostengünstig und präperativ wenig aufwendig sein, wenn eine Großserienfertigung wirtschaftlich arbeiten soll.

Bariumtitanat-Pulver werden nach sehr unterschiedlichen Verfahren hergestellt, die jedoch alle gewisse Nachteile insbesondere hinsichtlich ihrer Reinheit, ihrer Partikelgröße und ihrer Partikelgrößenverteilung haben.

So ist es bekannt, Bariumtitanat-Pulver nach dem sogenannten mixed-oxide-Verfahren herzustellen. Bariumcarbonat und Titandioxid werden dabei während eines Mahlprozesses gemischt und bei hohen Temperaturen im Bereich von 1000 °C zu Bariumtitanat umgesetzt. Nachteilig ist hierbei, daß das Pulver während der notwendigen Mahlprozesse durch Abrieb in unerwünschter Weise verunreinigt wird. Ein weiterer Nachteil ist, daß hohe Calcinierungstemperaturen erforderlich sind, wobei große aggregierte BaTi0₃-Pulverpartikel mit unregelmäßiger Partikelform und in breiter Partikelgrößenverteilung gebildet werden, die nach dem Calcinieren durch einen Mahlprozeß zerkleinert werden müssen, wobei jedoch Partikelgrößen < 1 µm nicht erreicht werden können. Außerdem erfordert der Calcinierungsschritt einen erheblichen Aufwand an Energie.

Weiter ist es z.B. aus J.Am.Cer.Soc. 48 (1965),S. 644ff bekannt, Bariumtitanat-Pulver durch thermische Zersetzung von Präzipitaten, z.B. von Bariumtitanyloxalaten, herzustellen. Dieses Verfahren liefert durch die Präzipitation zwar ein reineres Pulver als es mit dem mixed-oxide-Verfahren erhalten werden kann, jedoch sind auch hier Reaktionstemperaturen von etwa 1000 °C erforderlich. Die hierbei entstehenden Pulveraggregate müssen auch bei diesem Verfahren durch einen Mahlprozeß zerkleinert werden.

Feinteiliges, hochreines Bariumtitanat-Pulver mit einem Partikeldurchmesser im Bereich von 0,005 bis 0,03 µm kann durch Präzipitation bei niedrigen Temperaturen im Bereich von 20 bis 90 °C nach zwei weiteren bekannten Verfahren dargestellt werden:
1. Hydrolyse von Barium-Titanalkoholaten mit H₂0 (J.Am.Cer.Soc.54(1971),S.548-553) und
2. Hydrolyse von Titanalkoholaten in wässeriger Ba(OH)₂-Lösung (J.Am.Cer.Soc.49(1966),S.291-295).
Diese beiden bekannten Verfahren sind präparativ sehr aufwendig. Zur Verhinderung der Zersetzung der Alkoholate zu BaC0₃, Ti0₂ bzw. Ba(OH)₂ muß unter einer Atmosphäre gearbeitet werden, die frei von H₂0, C0₂ und 0₂ ist. Wenn nicht eine spezielle Prozeßkontrolle insbesondere von Reaktionstemperatur, Konzentration und Fällungsgeschwindigkeit durchgeführt wird, werden unerwünschte Abweichungen von der Morphologie und der Stöchiometrie des Bariumtitanat-Pulvers erhalten.

Bariumtitanat-Pulver kann weiterhin durch eine hydrothermale Reaktion erhalten werden. Dieses z.B. aus DE-OS 35 26 674 bekannte Verfahren ermöglicht, unter Einsatz von Hydroxiden, Halogeniden oder Alkoholaten bei Temperaturen im Bereich von 150 bis 200 °C und bei Drucken zwischen 5 bis 15 bar feinteiliges Bariumtitanat-Pulver darzustellen. Der präparative Aufwand dieses bekannten Verfahrens ist relativ hoch, da die Reaktion in Autoklaven stattfinden muß, wobei bestimmte Sicherheitsvorkehrungen getroffen werden müssen. Weiter kann es nachteilig sein, daß die Darstellung des Bariumtitanat-Pulvers nicht kontinuierlich sondern nur in einem Batchprozeß erfolgen kann.

Aus EP-A 141 551 ist ein Verfahren zur Herstellung von Erdalkalititanat-Pulvern bekannt, bei dem Titanoxid mit Bariumhydroxid zur Reaktion gebracht wird bei einer Reaktionstemperatur im Bereich von 60 bis 110 °C. Vorzugsweise wird als Titanoxid hoch wasserhaltige Orthotitansäure eingesetzt, die durch Reaktion eines Titansalzes wie das Chlorid, Sulfat oder Oxalat mit Alkalien erhalten wird. Orthotitansäure enthält mindestens 2 Mol Wasser. Es kann aber auch Metatitansäure mit einem Wassergehalt von 1 Mol oder Titandioxid, das durch Erhitzen von Orthotitansäure dargestellt wurde, eingesetzt werden.
Bei diesem Verfahren ist nachteilig, daß die eingesetzten Ausgangsverbindungen (Chloride, Sulfate, Oxalate, Alkalien) das herzustellende Endprodukt verunreinigen. Pulver mit Perowskitphase, die zur Herstellung von elektronischen Bauelementen eingesetzt werden sollen, müssen hochrein sein. Wird Orthotitansäure erhitzt, um Titandioxid herzustellen, ergibt sich das Problem, daß das Titandioxid kristallisiert und damit eine verringerte Reaktivität bei nachfolgenden Prozeßschritten zeigt. Ein weiteres Problem hierbei ist außerdem, daß infolge des Erhitzungsprozesses der Orthotitansäure und dem damit einhergehenden Kristallisierungsprozeß bereits unerwünschte Verunreinigungen wie Alkaliionen, Chloridionen, Sulfationen, Oxalationen in das Kristallgitter eingebaut werden können und bei späteren Reinigungsprozessen auch nicht mehr entfernbar sind.

Aus der europasichen Patentanmeldung EP-A1-0 141 551 ist ein Verfahren zur Herstellung von Bariumtitanat bekannt, bei dem TiO₂ aus Titan-tetra-chlorid, Titansulfat oder Oxalat durch Umsetzung mit Alkalien hergestellt wird. Die mit diesem Verfahren erhaltene Othotitansäure wird durch Erhitzen in Metatitansäure oder TiO₂ umgesetzt. Die Herstellung der Rohstoffe TiO₂ nach diesem Verfahren hat jedoch den Nachteil, daß durch die Fällung des TiO₂ mit Alkalien Alkali-Verunreinigungen sowie Chlorid bzw. Sulfat-Verunreinigungen in das TiO₂ Pulver eingebracht werden. Diese Verunreinigungen im TiO₂ Rohstoff werden in das im anschließenden Prozeß hergestellte BaTiO₂ eingebracht und führen hier als Akzeptor Dotierungen zu ungenügenden elektrischen Eigenschaften der BaTiO₃ Keramik. Weiterhin wird durch den Erhitzungsprozeß die Orthotitansäure in Metatitansäure überführt. Dies hat jedoch den Nachteil, daß durch die Bildung der weniger reaktiven Metatitansäure die Umsetzung zum Bariumtitanat deutlich gehemmt wird und damit höhere Reaktionstemperaturen und längere Reaktionszeiten notwendig sind.

Der Erfindung liegt die Aufgabe zugrunde, ein Verfahren anzugeben, mit dem hochreines Bariumtitanat-Pulver mit nahezu runder Partikelform hergestellt werden kann, das gegenüber den bekannten Bariumtitanat-Pulvern ein engeres Sinterintervall und damit eine verbesserte Sinterfähigkeit aufweist, das eine verbesserte Reaktivität zeigt mit Zusätzen, wie sie keramischen Massen auf Basis von Bariumtitanat zum Erreichen von gewünschten technischen Eigenschaften des Sinterproduktes zugegeben werden und das bereits in einer geeigneten Partikelgröße und Partikelgrößenverteilung erhalten wird, so daß Mahlprozesse überflüssig werden.

Diese Aufgabe wird erfindungsgemäß dadurch gelöst, daß amorphes Titandioxid mit einem Wassergehalt von ca. 0,5 Mol hergestellt wird durch Reaktion einer Titanalkoholatlösung in Xylol mit deionisiertem Wasser und nach Abtrennung des gewaschenen Reaktionsprodukts von der Waschlösung das ungetrocknete Reaktionsprodukt mit Bariumhydroxid im Überschuß in Wasser zur Reaktion gebracht wird und nach Entfernen überschüssiger Ionen getrocknet wird.

Nach einer vorteilhaften Weiterbildung des Verfahrens gemäß der Erfindung wird als Bariumhydroxid Ba(0H₂).8H₂0 eingesetzt.

Gemäß der Erfindung wird somit zur Herstellung des amorphen Titandioxids eine Titanalkoholatlösung mit deionisiertem Wasser zur Reaktion gebracht, das gewaschene Reaktionsprodukt von der Waschlösung getrennt und ungetrocknet dem nachfolgenden Prozeßschritt unterzogen. Vorteilhafterweise wird als Titanalkoholat in m-Xylol gelöstes Titan-tetra-ethoxid eingesetzt.

Der Erfindung liegt die Erkenntnis zugrunde, daß es zum reproduzierbaren Erreichen eines Bariumtitanat-Pulvers mit vorgegebener Partikelgröße in einem engen Partikelgrößenbereich nicht nur erforderlich ist, stabile Ausgangsmaterialien einzusetzen; es hat sich im Hinblick auf die Reaktion der zur Herstellung des Bariumtitanat-Pulvers eingesetzten Komponenten (Titandioxid und Bariumhydroxid) auch gezeigt, daß ein Mol-Verhältnis Ba:Ti = 1:1 insbesondere dann reproduzierbar genau eingestellt werden kann, wenn der Anteil an Wasser < 100 Mol beträgt, da die Lösung insbesondere der Bariumionen hierdurch herabgesetzt wird.

Mit dem Verfahren gemäß der Erfindung sind folgende Vorteile verbunden:
Es wird bei relativ niedrigen Reaktionstemperaturen im Bereich von 60 bis 95 °C und unter Atmosphärendruck ein feinkörniges, kristallines Bariumtitanat-Pulver einer Partikelgröße im Bereich von 0,01 bis 0,5 µm erhalten, das keinem weiteren Mahlprozeß mehr unterworfen werden muß; das erfindungsgemäße Verfahren umgeht also vorteilhafterweise hohe Reaktionstemperaturen und zu Verunreinigungen führende Mahlprozesse.
Weiterhin ermöglicht das erfindungsgemäße Verfahren die Herstellung von Bariumtitanat-Pulvern wohl definierter Partikelgröße und Morphologie ohne aufwendige Prozeßkontrolle.

Im Gegensatz zu den bekannten Präzipitations-Prozessen findet im vorliegenden Verfahren keine Hydrolyse von Barium- bzw. Titanalkoholaten zu BaTi0₃ statt. Dies bedeutet, daß das vorliegende Verfahren präparativ weniger aufwendig ist, da nicht unter Ausschluß von H₂0 und 0₂ gearbeitet werden muß.

Bei den bekannten Präzipitationsverfahren muß deswegen unter Ausschluß von H₂0 und 0₂ gearbeitet werden, da sonst durch eine vorzeitige Hydrolyse der Barium- bzw. Titanalkoholate heterogene Keime in der Ausgangslösung gebildet werden, die eine unkontrollierte Keimbildung und ein unkontrolliertes Keimwachstum während der Präzipitation bewirken, wodurch ein Bariumtitanat-Pulver gebildet wird, dessen Partikelgröße schwierig kontrollierbar ist.
Bei dem erfindungsgemäßen Verfahren ist die Partikelgröße des Bariumtitanat-Pulvers von vornherein durch die Auswahl der Verfahrensparameter Reaktionsdauer und Reaktionstemperatur zum einen in weiten Bereichen einstellbar und zum anderen kontrollierbar; es lassen sich also Bariumtitanat-Pulver definierter Partikelgröße reproduzierbar herstellen.

Gegenüber dem hydrothermalen Prozeß hat das vorliegende Verfahren den Vorteil, daß die Reaktion zur Bildung von Bariumtitanat ohne erhöhten Druck erfolgen kann. Das Arbeiten unter Normaldruck ermöglicht einen kontinuierlichen Prozeß, wohingegen bei Reaktionen unter Druck nur ein Batchprozeß eingesetzt werden kann. Durch die kontinuierliche Prozeßführung können erhebliche Kosten eingespart werden, weil sich keine Leerlaufzeiten für die Vorrichtung ergeben, weil die Vorrichtungsgröße je nach Bedarf gewählt werden kann und weil eine kontinuierliche Prozeßsteuerung möglich ist.

Anhand der Figuren wird ein Ausführungsbeispiel der Erfindung beschrieben und in seiner Wirkungsweise erläutert. Es zeigen:
- Fig. 1: Röntgenbeugungsdiagramm von ungetrocknetem, amorphem Titandioxid als Ausgangsmaterial für die Herstellung von Bariumtitanat im Verfahren gemäß der Erfindung,
- Fig. 2: Röntgenbeugungsdiagramm von nach dem vorliegenden Verfahren hergestelltem Bariumtitanat.

Nach dem erfindungsgemäßen Verfahren wird Bariumtitanat-Pulver auf folgende Weise dargestellt:
Amorphes Titandioxid mit einem Wassergehalt von ≈ 0,5 Mol wird mit Bariumhydroxid im Überschuß, bevorzugt Ba(0H)₂.8H₂0, in Wasser unter Ausschluß von C0₂ bei einer Temperatur von ≈ 95 °C umgesetzt.

### 1. Darstellung von amorphem Titandioxid.

Titandioxid mit einem Wassergehalt von ≈ 0,5 Mol wird durch Reaktion von Titan-tetra-ethoxid mit H₂0 erhalten. In einem 1000 cm³-Rundkolben werden 0,24 Mol Titan-tetra-ethoxid in 450 ml m-Xylol (p.A.) gelöst. Die 0,48 M Titanalkoholatlösung wird kräftig gerührt. In die Titanalkoholatlösung werden 43,2 ml deionisiertes Wasser aus einem 50 ml-Tropftrichter innerhalb einer Dauer von 60 min zugetropft. Der erhaltene Niederschlag wird abzentrifugiert und zur Entfernung von Xylolresten auf der Partikeloberfläche mit Ethanol gewaschen. Dazu wird das Zentrifugat in 500 ml Ethanol (vergällt) in einem Ultraschallbad 30 min dispergiert und anschließend durch Zentrifugieren von der Waschlösung getrennt. Dieser Vorgang wird wiederholt.

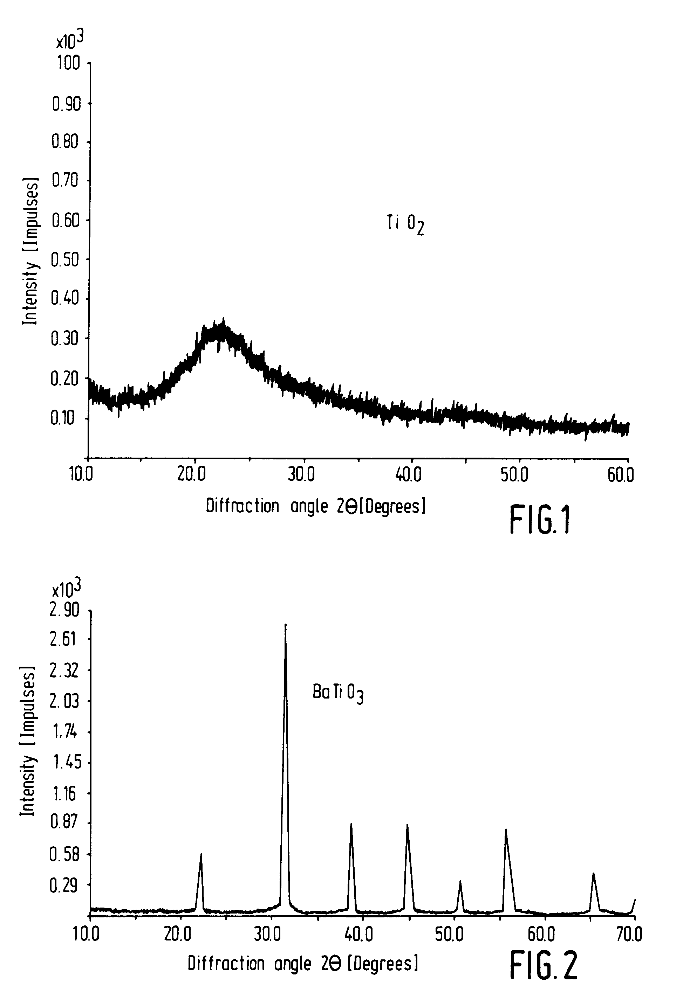

Das auf diese Weise dargestellte Titandioxid-Pulver ist röntgenamorph; hierzu wird auf Figur 1 hingewiesen. Das breite Maximum bei einem Beugungswinkel 2 0 ≈ 22 ° resultiert von an der Pulveroberfläche haftenden Lösungsmittelresten.

Nach dem oben beschriebenen Verfahren wird ein feinteiliges Titandioxid-Pulver eines mittleren Partikeldurchmessers von 0,2 µm mit runder Partikelform und mit einem Wassergehalt von ≈ 0,5 Mol erhalten.

Das auf die oben beschriebene Weise erhaltene Zentrifugat wird in der nachfolgenden Reaktion ohne Trocknung eingesetzt. Aufgrund der Feinteiligkeit des Pulvers weist das Zentrifugat hohe Lösungsmittelmengen auf. Der Ti0₂-Gehalt des Zentrifugats beträgt, gravimetrisch bestimmt, 0,152 g Ti0₂/g Zentrifugat.

### 2. Darstellung von Bariumtitanat.

3,7162 g des gebildeten Titandioxidpulvers, das 0,5649 g Ti0₂ und als Rest Ethanol enthält, werden mit 4,4711 g Ba(0H)₂.8H₂0 in einen 100 ml-Dreihalskolben aus einem gegenüber insbesondere Alkalien inerten Material eingewogen. Zu dem Pulvergemisch werden unter N₂-Atmosphäre 25 ml C0₂-freies doppelt destilliertes Wasser zugefügt.
Die erhaltene Suspension wird unter Rühren zum Sieden erhitzt und bei der Siedetemperatur unter Rückfluß zur Reaktion gebracht. Zur Homogenisierung der Suspension wird die Reaktion unter ständigem Rühren mit Hilfe eines Magnetrührers durchgeführt. Nach einer Reaktionszeit von 91 h wird das erhaltene Pulver von der Mutterlösung durch Druckfiltration unter Einsatz von N₂ als Druckgas entfernt. Als Filter werden Zelluloseacetatfilter mit einer Porengröße von 0,2 µm verwendet.

Das erhaltene Pulver wird zur Entfernung des im Überschuß eingesetzten Ba(0H)₂.8H₂0 mehrere Male mit 50 ml deionisiertem, siedendem Wasser und einmal mit 25 ml 1 M wässeriger Essigsäure gewaschen. Die vollständige Entfernung der überschüssigen Bariumionen im Waschwasser wird durch Ausfällen von BaS0₄ kontrolliert. Die an der Pulveroberfläche haftende Essigsäure sowie das Wasser werden durch Waschen des Pulvers zunächst dreimal mit 75 ml deionisiertem, kochendem Wasser und anschließend dreimal mit 10 ml Ethanol (vergällt) entfernt.
Das erhaltene Produkt wird zur weiteren Analyse im Trockenschrank 60 min bei einer Temperatur von 120 °C getrocknet.

Das Röntgenbeugungsdiagramm des gemäß den oben beschriebenen Reaktionsbedingungen erhaltenen Pulvers (Figur 2) zeigt keine weiteren Phasen außer Bariumtitanat. Entsprechend der geringen Partikelgröße zeigt das erhaltene Bariumtitanat-Pulver kubische bis pseudokubische Struktur.

Mittels SEM (scanning electron microscopy)-Untersuchungen bei 40 000-facher Vergrößerung wurde feinteiliges Bariumtitanat-Pulver mit runder Partikelform und einem mittleren Partikeldurchmesser von etwa 0,086 µm nachgewiesen. Das nach dem vorliegenden Verfahren hergestellte Bariumtitanat-Pulver weist stöchiometrische Zusammensetzung auf.

## Patentansprüche

1. Verfahren zur Herstellung von Bariumtitanat in Pulverform, wobei Titandioxid mit Bariumhydroxid bei einer Temperatur im Bereich von 60-95°C unter Ausschluß von CO₂ zur Reaktion gebracht wird,
dadurch gekennzeichnet, daß amorphes Titandioxid mit einem Wassergehalt von ca. 0,5 Mol hergestellt wird durch Reaktion einer Titanalkoholatlösung in Xylol mit deionisiertem Wasser und nach Abtrennung des gewaschenen Reaktionsprodukts von der Waschlösung das ungetrocknete Reaktionsprodukt mit Bariumhydroxid im Überschuß in Wasser zur Reaktion gebracht wird und nach Entfernen überschüssiger Ionen getrocknet wird.

2. Verfahren nach Anspruch 1,
dadurch gekennzeichnet,
daß als Bariumhydroxid Ba(0H)₂.8H₂0 eingesetzt wird.

3. Verfahren nach Anspruch 1,
dadurch gekennzeichnet,
daß zur Herstellung des amorphen Titandioxids eine Titanalkoholat-Lösung mit deionisiertem Wasser zur Reaktion gebracht, das gewaschene Reaktionsprodukt von der Waschlösung getrennt und ungetrocknet dem nachfolgenden Prozeßschritt unterzogen wird.

4. Verfahren nach Anspruch 3,
dadurch gekennzeichnet,
daß als Titanalkoholat in m-Xylol gelöstes Titan-tetra-ethoxid eingesetzt wird.

## Claims

1. A method of manufacturing powdered barium titanate, in which titanium dioxide is made to react with barium hydroxide, at a temperature in the range from 60 to 95°C, while excluding C0₂, characterized in that amorphous titanium dioxide having a water content of approximately 0.5 mol. is manufactured by making a titanium alcoholate solution in xylol react with deionized water and, after separating the washed reaction product from the washing solution, reacting the undried reaction product with an excess amount of barium hydroxide in water, removing excess barium ions and then drying said product.

2. A method as claimed in Claim 1, characterized in that Ba(OH)2.8H20 is used as barium hydroxide.

3. A method as claimed in Claim 1, characterized in that for the manufacture of the amorphous titanium dioxide a titanium alcoholate solution is made to react with deionised water, the washed reaction product is separated from the washing solution and subjected to the subsequent process step in an undried condition.

4. A method as claimed in Claim 3, characterized in that titanium tetraethoxide dissolved in m-xylol is used as titanium alcoholate.

## Revendications

1. Procédé de préparation de titanate de baryum sous forme de poudre dans lequel on fait réagir du dioxyde de titane avec de l'hydroxyde de baryum, à l'exclusion de CO₂, à une température comprise entre 60 et 95°C, caractérisé en ce que du dioxyde de titane amorphe présentant une teneur en eau de l'ordre de 0,5 mole est fabriqué par la réaction d'une solution d'alcoolat de titane dans le xylène avec de l'eau désionisée et qu'après la séparation du produit de réaction lavé de la solution de lavage on fait réagir en excès d'eau le produit de réaction non séché avec de l'hydroxyde de baryum pour être séché après l'enlèvement d'ions superflus.

2. Procédé selon la revendication 1, caractérisé en ce que l'on utilise du Ba(OH)₂.8H₂O comme hydroxyde de baryum.

3. Procédé selon la revendication 1, caractérisé en ce que pour la fabrication du dioxyde de titane amorphe on fait réagir une solution d'alcoolat de titane avec de l'eau désionisée et que le produit de réaction lavé est séparé de la solution de lavage pour être soumis à l'étape suivante sans être séché.

4. Procédé selon la revendication 3, caractérisé a ce que l'on utilise comme alcoolat de titane du tétraéthoxyde de titane dissous dans le xylène.
